# EUROPÄISCHE PATENTANMELDUNG

(11) **EP 3 511 739 A1**
(43) Veröffentlichungstag der Anmeldung: **17.07.2019**
(21) Anmeldenummer: 18151344.1
(22) Anmeldetag: 12.01.2018
(51) Int. Cl.: G01S 17/42, G01S 7/497

(54) **PRÜFVORRICHTUNG FÜR OPTISCHES MESSSYSTEM**

(71) Anmelder: SICK AG, 79183 Waldkirch/Breisgau (DE)
(72) Erfinder: WERBER, Armin, 79331 Teningen (DE)
(74) Vertreter: Manitz Finsterwald Patent- und Rechtsanwaltspartnerschaft mbB

(57) **Zusammenfassung**

Ein optisches Messsystem, insbesondere ein Laserscanner, ist dazu ausgebildet, Messstrahlung mit um eine Drehachse variabler Winkelausrichtung durch die Frontscheibe hindurch auszusenden, wobei die Stelle der Frontscheibe, an der die Messstrahlung die Frontscheibe passiert, von der Winkelausrichtung der Messstrahlung abhängig ist. Eine Prüfvorrichtung zum Erfassen von Verschmutzungen der Frontscheibe eines solchen Messsystems umfasst eine Strahlungsquelle zum Erzeugen einer Prüfstrahlung, einen Detektor zum Erfassen der Prüfstrahlung sowie eine Strahlführungsanordnung, die dazu ausgebildet ist, die Prüfstrahlung von der Strahlungsquelle durch die Frontscheibe hindurch zu dem Detektor zu führen. Dabei umfasst die Strahlführungsanordnung einen um die Drehachse verstellbaren Drehspiegel und ist dazu ausgebildet, die Prüfstrahlung unabhängig von der aktuellen Stellung des Drehspiegels von der Strahlungsquelle zu dem Detektor zu führen und die Prüfstrahlung auf dem Weg von der Strahlungsquelle zu dem Detektor an einer Stelle durch die Frontscheibe hindurch zu führen, die von der aktuellen Stellung des Drehspiegels abhängig ist.

## Beschreibung

Die vorliegende Erfindung betrifft eine Prüfvorrichtung zum Erfassen von Verschmutzungen einer Frontscheibe eines optischen Messsystems, insbesondere eines Laserscanners, welches dazu ausgebildet ist, Messstrahlung mit um eine Drehachse variabler Winkelausrichtung, insbesondere (zumindest mit einer Komponente der Messstrahlung) in zu der Drehachse radialer Richtung, durch die Frontscheibe hindurch auszusenden, wobei die Stelle der Frontscheibe, an der die Messstrahlung die Frontscheibe passiert, von der Winkelausrichtung der Messstrahlung abhängig ist.

Bei der Messstrahlung kann es sich insbesondere um Laserstrahlung handeln. Aufgrund der variablen Winkelausrichtung kann die Messstrahlung beispielsweise über ein zu erfassendes Objekt gelenkt werden, so dass das Objekt durch die Messstrahlung in Umfangsrichtung um die genannte Drehachse abgetastet werden kann. Die genannte Winkelausrichtung entspricht dabei in Bezug auf die Drehachse einem Azimutwinkel. Grundsätzlich kann die Ausrichtung der Messstrahlung außerdem auch in anderer Hinsicht variabel sein, beispielsweise hinsichtlich eines linearen Versatzes und/oder eines auf die Drehachse bezogenen Polarwinkels.

Das optische Messsystem weist eine Frontscheibe auf, die beispielsweise dazu dient, eine Strahlungsquelle und/oder optische Komponenten, wie etwa eine Strahlführungsanordnung, des Messsystems gegenüber Einwirkungen, insbesondere mechanischer Art, zu schützen, zugleich aber die Messstrahlung durchzulassen. An welcher Stelle die ausgesendete Messstrahlung die Frontscheibe passiert, hängt dabei von der jeweils aktuellen Ausrichtung der Messstrahlung ab, die sich im Rahmen einer Messung typischerweise kontinuierlich verändert. Da der Strahlquerschnitt der Messstrahlung in der Praxis nicht unendlich klein, sondern ausgedehnt ist, umfasst die genannte Stelle der Frontscheibe jeweils einen entsprechend ausgedehnten Bereich der Frontscheibe.

Wird die Ausrichtung der Messstrahlung kontinuierlich verändert, ändert sich ebenso kontinuierlich die Stelle, an der die Messstrahlung die Frontscheibe jeweils gerade passiert, so dass nacheinander verschiedene, fortlaufend überlappende Bereiche der Frontscheibe von der Messstrahlung passiert werden. Wenn im Rahmen einer jeweiligen Messung ein bestimmter Abtastbereich, insbesondere ein gewisser Winkelbereich der Winkelausrichtung der Messstrahlung, durchlaufen wird, wird die Frontscheibe daher insgesamt über ein ganzes von dem Abtastbereich abhängiges Messfenster von der Messstrahlung passiert, welches sich aus der Überlagerung aller beim Durchlaufen des Abtastbereichs passierten Bereiche der Frontscheibe ergibt. Ein jeweiliger Abtastbereich kann beispielsweise einen Winkelbereich von zumindest 180°, bevorzugt von zumindest 270°, insbesondere von vollen 360° umfassen. Dementsprechend kann sich auch das Messfenster über einen jeweils entsprechenden Winkelbereich erstrecken.

Beim Passieren der Frontscheibe kann die Messstrahlung durch Verschmutzungen der Frontscheibe beeinträchtigt werden, beispielsweise infolge von Absorption und/oder Streuung an den Verschmutzungen, was zu einer Abschwächung der Messstrahlung führt. Da hierdurch Messergebnisse des Messsystems verfälscht werden können, ist es wichtig, die optische Durchlässigkeit der Frontscheibe für die Messstrahlung zumindest über das gesamte jeweilige Messfenster hinweg sicherzustellen. Es ist daher zweckmäßig, die Frontscheibe, vorzugsweise automatisiert, insbesondere auch bei laufender Messung, auf Verschmutzungen überprüfen zu können.

Eine Überprüfung der Frontscheibe auf Verschmutzungen kann beispielsweise dadurch erfolgen, dass die Frontscheibe mit einer Prüfstrahlung durchleuchtet wird, deren Intensität nach dem Passieren der Frontscheibe erfasst wird. Da die Prüfstrahlung, die nicht zwingend dieselbe Wellenlänge oder dieselben Wellenlängen wie die Messstrahlung aufweisen muss, dabei ähnlich wie die Messstrahlung von Verschmutzungen der Frontscheibe absorbiert und/oder gestreut und dadurch abgeschwächt wird, kann anhand der Abschwächung der erfassten Prüfstrahlung gegenüber der ausgesendeten Prüfstrahlung auf einen Verschmutzungsgrad der Frontscheibe zurückgeschlossen werden. Wenn festgestellt wird, dass eine Verschmutzung vorliegt, etwa wenn die erfasste Intensität der Prüfstrahlung unter einen Schwellenwert sinkt, ab dem die Beeinträchtigung der Detektionsfähigkeit des Messsystems durch Verschmutzungen nicht vernachlässigbar ist, kann darauf z.B. durch einen Warnhinweis und/oder durch Überführen des Messsystems in einen sicheren Zustand reagiert werden.

Schwierigkeiten einer solchen Überwachung der Frontscheibe auf Verschmutzungen können sich beispielsweise daraus ergeben, dass geringe Verschmutzungen aufgrund der kurzen Wegstrecke, über die die Prüfstrahlung mit den Verschmutzungen zusammenwirkt, nicht zuverlässig erkannt werden; dass es zu einem optischen Übersprechen der Prüfstrahlung und der Messstrahlung kommen kann, wenn die Prüfstrahlung und die Messstrahlung die Frontscheibe gleichzeitig an derselben Stelle passieren; und dass nicht lediglich eine einzige feststehende Stelle der Frontscheibe überwacht werden muss, sondern ein ausgedehntes Messfenster.

Um einen ausgedehnten Bereich der Frontscheibe überwachen zu können, kann die Prüfvorrichtung mehrere Strahlungsquellen zum Aussenden von Prüfstrahlung und/oder mehrere Detektoren zum Erfassen der jeweiligen Prüfstrahlung umfassen, so dass verschiedene Abschnitte der Frontscheibe von Prüfstrahlung durchleuchtet werden, die aus jeweils verschiedenen Strahlungsquellen stammt bzw. die anschließend von jeweils verschiedenen Detektoren erfasst wird. Durch die Vielzahl von Strahlungsquellen bzw. Detektoren erfordert eine solche Prüfvorrichtung aber nicht nur relativ viel Platz, der einer angestrebten Miniaturisierung des Messsystems entgegensteht, sondern das zu überprüfende Messfenster wird auch in Segmente unterteilt, die separat voneinander durch zumindest teilweise unterschiedliche Elemente der Prüfvorrichtung überwacht werden, so dass Unterschiede in der Überwachung der verschiedenen Segmente nicht grundsätzlich ausgeschlossen werden können und somit eine aufwendige Kalibrierung der verschiedenen Strahlungsquellen bzw. Detektoren in Bezug zueinander erforderlich ist. Da zudem feststehende Segmente durchleuchtet werden, das Messfenster aber nicht räumlich kontinuierlich überprüft wird, können zwischen den Segmenten Lücken bestehen, in denen Verschmutzungen nicht erkannt werden.

Es ist eine Aufgabe der Erfindung, eine Prüfvorrichtung sowie ein optisches Messsystem mit einer solchen Prüfvorrichtung bereitzustellen, welche die genannten Nachteile vermeiden und insbesondere eine zuverlässige Überwachung der Frontscheibe auf Verschmutzungen über das gesamte Messfenster hinweg, vorzugsweise bei laufendem Betrieb, mit vergleichsweise einfachen Mitteln bei möglichst kompakter Bauweise ermöglichen.

Die Aufgabe wird gelöst durch eine Prüfvorrichtung mit den Merkmalen des Anspruchs 1 sowie durch ein optisches Messsystem mit den Merkmalen des Anspruchs 11. Vorteilhafte Ausführungsformen ergeben sich aus den Unteransprüchen, der vorliegenden Beschreibung sowie den Figuren.

Erfindungsgemäß umfasst die Prüfvorrichtung eine Strahlungsquelle, beispielsweise eine Infrarot-LED, zum Erzeugen einer Prüfstrahlung, einen Detektor, beispielsweise eine Infrarot-Fotodiode, zum Erfassen der Prüfstrahlung sowie eine Strahlführungsanordnung, die dazu ausgebildet ist, die Prüfstrahlung von der Strahlungsquelle durch die Frontscheibe hindurch zu dem Detektor zu führen. Dabei umfasst die Strahlführungsanordnung einen um eine Drehachse verstellbaren Drehspiegel und ist dazu ausgebildet, die Prüfstrahlung unabhängig von der aktuellen Stellung des Drehspiegels von der Strahlungsquelle zu dem Detektor zu führen und die Prüfstrahlung auf dem Weg von der Strahlungsquelle zu dem Detektor an einer Stelle durch die Frontscheibe hindurch zu führen, die von der aktuellen Stellung des Drehspiegels abhängig ist. Die Drehachse, um die der Drehspiegel verstellbar ist, entspricht vorzugsweise derjenigen Drehachse, in Bezug auf welche die Winkelausrichtung der Messstrahlung des optischen Messsystems variabel ist. Mit anderen Worten ist die Prüfvorrichtung dazu ausgebildet, derart an dem Messsystem vorgesehen zu werden, dass die beiden Drehachsen zusammenfallen.

Ein wesentlicher Aspekt der Erfindung besteht anspruchsgemäß darin, dass die Prüfstrahlung einerseits unabhängig von der veränderbaren Stellung des Drehspiegels jeweils von der Strahlungsquelle zu dem Detektor der Prüfvorrichtung geführt wird, andererseits aber die Frontscheibe an einer von der veränderbaren Stellung des Drehspiegels abhängigen Stelle passiert. Unabhängig von der aktuellen Stellung des Drehspiegels sind insofern der Start und das Ziel des Weges, auf dem die Prüfstrahlung von der Strahlführungsanordnung geführt wird, nämlich stets von der Strahlungsquelle (Start) zum Detektor (Ziel). Abhängig von der aktuellen Winkelstellung des Drehspiegels ist dagegen, auf welchem Weg und insbesondere durch welche konkrete drehwinkelabhängige Stelle der Frontscheibe hindurch die Prüfstrahlung dabei jeweils von der Strahlungsquelle zum Detektor gelangt. Insofern lässt sich der genannte Erfindungsaspekt auch so beschreiben, dass die Strahlführungsanordnung dazu ausgebildet ist, die Prüfstrahlung auf einem Weg zu führen, der die Frontscheibe jeweils an einer von der aktuellen Stellung des Drehspiegels abhängigen Stelle passiert, aber unabhängig von der aktuellen Stellung des Drehspiegels jeweils von der Strahlungsquelle zu dem Detektor führt.

Mit anderen Worten wird die Prüfstrahlung stets von derselben Strahlungsquelle zu demselben Detektor geführt, wobei aber der Weg, auf dem die Prüfstrahlung von der Strahlungsquelle zu dem Detektor gelangt, variabel ist, nämlich durch Drehen des Drehspiegels so verändert werden kann, dass nacheinander verschiedene Stellen der Frontscheibe passiert werden. Insbesondere kann die Prüfstrahlung durch kontinuierliches Verstellen des Drehspiegels die Frontscheibe, zwar nicht gleichzeitig, aber kontinuierlich nacheinander an mehreren verschiedenen Stellen passieren und somit letztlich insgesamt einen größeren zusammenhängenden Bereich der Frontscheibe passieren, der vorzugsweise zumindest das genannte Messfenster umfasst.

Die Prüfvorrichtung ermöglicht auf diese Weise eine räumlich kontinuierliche Überprüfung des gesamten Messfensters auf Verschmutzungen. So kann anders als bei einem separaten Erfassen verschiedener Segmente der Frontscheibe zuverlässig ausgeschlossen werden, dass zwischen zwei Segmenten liegende Bereiche der Frontscheibe übersehen werden. Ferner braucht die Prüfvorrichtung aufgrund der erfindungsgemäßen Ausbildung der Strahlführungsanordnung lediglich eine einzige Strahlungsquelle sowie lediglich einen einzigen Detektor zu umfassen. Das ist nicht nur hinsichtlich der Kompaktheit der Prüfvorrichtung bzw. de Kompaktheit eines optischen Messsystems mit einer solchen Prüfvorrichtung vorteilhaft, sondern auch insofern, als sich auch eine Kalibrierung verschiedener Strahlungsquellen bzw. verschiedener Detektoren in Bezug zueinander erübrigt.

Um zu erreichen, dass die Prüfstrahlung stets von der (einen) Strahlungsquelle zu dem (einen) Detektor geführt wird, dabei aber in Abhängigkeit von der aktuellen Stellung des Drehspiegel eine jeweils andere Stelle der Frontscheibe passiert, kann die Strahlführungsanordnung auf grundsätzlich unterschiedliche Weise ausgebildet sein und etwa neben dem genannten Drehspiegel weitere bewegliche Spiegel aufweisen.

Gemäß einer besonders vorteilhaften Ausführungsform umfasst die Strahlführungsanordnung, insbesondere zu dem genannten Zweck, zumindest einen Spiegel, der sich zumindest teilweise ringförmig um die genannte Drehachse erstreckt, um welche auch der Drehspiegel der Prüfvorrichtung verstellbar ist. Dabei muss der Spiegel nicht zwangsläufig eine geschlossene Ringform aufweisen. Insbesondere wenn sich das Messfenster der Frontscheibe, dessen optische Durchlässigkeit für die Messstrahlung durch die Prüfvorrichtung sichergestellt werden soll, lediglich über einen Winkelbereich von weniger als 360° um die Drehachse erstreckt, braucht sich auch die Ringform des Spiegels lediglich über einen entsprechenden Winkelbereich erstrecken, kann aber gleichwohl auch größer sein. Die Spiegelfläche des ringförmigen Spiegels braucht dabei nicht eben zu sein. Beispielsweise kann der Spiegel eine Spiegelfläche in Form einer Mantelfläche eines Kegelstumpfes bzw. eines Kegelstumpfsegments oder eine Spiegelfläche mit einer Freiform aufweisen, wobei die Spiegelfläche in diesem Fall in Umfangsrichtung um die Drehachse einen vorzugsweise konstanten Querschnitt aufweist.

Gemäß einer bevorzugten Weiterbildung umfasst die Strahlführungsanordnung zumindest zwei Spiegel, die sich zumindest teilweise ringförmig um die Drehachse erstrecken, wobei die Strahlführungsanordnung dazu ausgebildet ist, die Prüfstrahlung auf dem Weg von der Strahlungsquelle zu dem Detektor jeweils - d.h. unabhängig davon, auf welchem von der aktuellen Drehstellung des Drehspiegels abhängigen Weg die Prüfstrahlung jeweils von der Strahlungsquelle zu dem Detektor gelangt und an welcher Stelle die Prüfstrahlung dabei die Frontscheibe passiert - von dem einen der zwei Spiegel durch die Frontscheibe hindurch zu dem anderen der zwei Spiegel zu führen. Mit anderen Worten werden die beiden Spiegel auf unterschiedlichen Seiten der Frontscheibe angeordnet, so dass die Prüfstrahlung die Frontscheibe auf dem Weg von dem einen Spiegel zu dem anderen Spiegel passiert. Vorzugsweise befindet sich zwischen den beiden Spiegeln kein weiteres Element der Strahlführungsanordnung, zumindest kein weiterer Spiegel, sondern lediglich die Frontscheibe.

Insbesondere durch die genannte Ringform eines jeweiligen Spiegels wird ermöglicht, dass die Prüfstrahlung die Frontscheibe an verschiedenen Stellen passieren kann, aber dennoch stets von derselben Strahlungsquelle zu demselben Detektor geführt wird. Die Stelle, an der die Prüfstrahlung jeweils auf den Spiegel trifft und reflektiert wird, kann dann ähnlich wie die Stelle, an der die Prüfstrahlung die Frontscheibe passiert, von der aktuellen Stellung des Drehspiegels abhängen. Die verschiedenen von der aktuellen Stellung des Drehspiegels abhängigen Wege, auf denen die Prüfstrahlung von der Strahlungsquelle zum Detektor gelangt, sind einander dabei vorzugsweise grundsätzlich ähnlich, insbesondere insofern, als sie sich hinsichtlich der Abfolge der die Prüfstrahlung führenden Elemente der Strahlführungsanordnung nicht unterscheiden. Insbesondere können die verschiedenen Wege bezüglich der Drehachse symmetrisch zueinander sein.

Gemäß einer weiteren besonders vorteilhaften Ausführungsform ist die Strahlführungsanordnung dazu ausgebildet, die Prüfstrahlung auf dem Weg von der Strahlungsquelle zu dem Detektor jeweils zweimal durch die Frontscheibe hindurch zu führen. Vorzugsweise wird die Prüfstrahlung dabei zweimal an zumindest im Wesentlichen derselben Stelle durch die Frontscheibe hindurch geführt, d.h. dass die beiden Stellen zwar nicht exakt identisch sein müssen, aber zumindest überlappen, insbesondere mit wenigstens 60%, vorzugsweise wenigstens 80% des Strahlquerschnitts der Prüfstrahlung. Dadurch, dass die Prüfstrahlung die Frontscheibe jeweils zweimal passiert, wirken sich Verschmutzungen der Frontscheibe doppelt auf die Prüfstrahlung aus. Das gilt insbesondere dann, wenn die beiden Stellen, an denen die Prüfstrahlung die Frontscheibe dabei passiert, identisch sind oder zumindest überlappen. Somit erhöht sich vorteilhafterweise die Empfindlichkeit der Verschmutzungserfassung, so dass auch geringe Verschmutzungen zuverlässig erkannt werden.

Gemäß einer bevorzugten Weiterbildung umfasst die Strahlführungsanordnung einen Umkehrspiegel und ist dazu ausgebildet, die Prüfstrahlung auf dem Weg von der Strahlungsquelle zu dem Detektor jeweils von der Strahlungsquelle durch die Frontscheibe hindurch zu dem Umkehrspiegel zu führen, an dem Umkehrspiegel zurückzuspiegeln und von dem Umkehrspiegel, vorzugsweise an zumindest im Wesentlichen derselben Stelle wie zuvor, durch die Frontscheibe hindurch zu dem Detektor zu führen. Bei diesem Umkehrspiegel kann es sich insbesondere um den vorstehend genannten zumindest teilweise ringförmigen Spiegel bzw. einen der zwei vorstehend genannten zumindest teilweise ringförmigen Spiegel handeln.

Der Umkehrspiegel spiegelt die Prüfstrahlung vorzugsweise zumindest im Wesentlichen entlang desselben optischen Pfads zurück, auf dem die Prüfstrahlung zum Umkehrspiegel gelangt ist. Da die Prüfstrahlung auf dem Weg zum Umkehrspiegel auseinanderlaufen kann - d.h. dass sich der Strahlquerschnitt vergrößert, wenn z.B. zur Einsparung optischer Bauteile auf fokussierende Linsen verzichtet wird -, kann es ferner zweckmäßig sein, wenn der Umkehrspiegel dazu ausgebildet ist, die Prüfstrahlung in Richtung zum Detektor zumindest teilweise zu bündeln. Unter anderem in diesem Zusammenhang ist es bevorzugt, wenn die Spiegelfläche des Umkehrspiegels, an der die Prüfstrahlung reflektiert wird, als Freiformfläche ausgebildet ist, die vorzugsweise zu einer Fokussierung der zurückgespiegelten Prüfstrahlung auf den Detektor ausgebildet ist.

Gemäß einer vorteilhaften Ausführungsform umfasst die Strahlführungsanordnung einen Umlenkspiegel und ist dazu ausgebildet, die Prüfstrahlung auf dem Weg von der Strahlungsquelle zu dem Detektor jeweils von der Strahlungsquelle über den Umlenkspiegel durch die Frontscheibe hindurch zu führen und/oder durch die Frontscheibe hindurch über den Umlenkspiegel zu dem Detektor zu führen. Bei dem Umlenkspiegel kann es sich insbesondere um den vorstehend genannten zumindest teilweise ringförmigen Spiegel bzw. einen der zwei vorstehend genannten zumindest teilweise ringförmigen Spiegel handeln.

Ferner kann die Strahlführungsanordnung insbesondere dazu ausgebildet sein, die Prüfstrahlung auf dem Weg von der Strahlungsquelle zu dem Detektor jeweils von der Strahlungsquelle über den Umlenkspiegel durch die Frontscheibe hindurch zu dem genannten Umkehrspiegel zu führen und/oder von dem genannten Umkehrspiegel durch die Frontscheibe hindurch über den Umlenkspiegel zu dem Detektor zu führen. Vorzugsweise befindet sich bei einer solchen Ausführungsform zwischen dem Umlenkspiegel und dem Umkehrspiegel kein weiteres Element der Strahlführungsanordnung, zumindest kein weiterer Spiegel, sondern lediglich die Frontscheibe.

Gemäß einer weiteren vorteilhaften Ausführungsform ist die Strahlführungsanordnung dazu ausgebildet, die Prüfstrahlung auf dem Weg von der Strahlungsquelle zu dem Detektor jeweils in einer Strahlausrichtung durch die Frontscheibe hindurch zu führen, die zumindest im Wesentlichen parallel zu der genannten Drehachse ist. Beispielsweise kann die Strahlausrichtung mit der Drehachse einen Winkel von höchstens 20°, insbesondere höchstens 10°, einschließen. Wenn die Frontscheibe ihrerseits zumindest im Wesentlichen parallel zu der Drehachse angeordnet ist, aber mit der Drehachse einen anderen Winkel einschließt als die Prüfstrahlung beim Passieren der Frontscheibe, kann ein streifender Einfall der Prüfstrahlung auf die Frontscheibe erreicht werden, beispielsweise unter einem Winkel von zumindest 10° und/oder höchstens 30°. Ein streifender Einfall der Prüfstrahlung auf die Frontscheibe hat den Vorteil, dass die Prüfstrahlung auch bei vergleichsweise geringem Strahlquerschnitt dennoch einen großen Abschnitt des Messfensters erfassen kann, so dass eine dünne Schmutzschicht auf der Frontscheibe eine stärkere und somit besser erfassbare Abschwächung der Prüfstrahlung verursacht, als es etwa bei einem senkrechten Einfall auf die Frontscheibe der Fall wäre. Der Querschnitt der Frontscheibe bezüglich der Umfangsrichtung um die Drehachse kann beispielsweise gegenüber der Drehachse um etwa 10° bis 20° geneigt sein und/oder einen gebogenen Verlauf aufweisen.

Außerdem werden durch einen streifenden Einfall direkte Rückstreuungen des Prüflichtes an der Oberfläche der Frontscheibe in Richtung des einfallenden Lichtes vermieden.

Alternativ oder zusätzlich zu einer solchen Ausrichtung der Prüfstrahlung ist es vorteilhaft, wenn die Strahlführungsanordnung dazu ausgebildet ist, die Prüfstrahlung auf dem Weg von der Strahlungsquelle zu dem Detektor jeweils quer zu derjenigen Strahlausrichtung durch die Frontscheibe hindurch zu führen, mit der die Messstrahlung die Frontscheibe an zumindest im Wesentlichen derselben Stelle, aber nicht unbedingt zu demselben Zeitpunkt, passiert. Wenn die Prüfstrahlung und die Messstrahlung beim Passieren der Frontscheibe quer zueinander ausgerichtet sind, kann dies, insbesondere wenn die Prüfstrahlung und die Messstrahlung die Frontscheibe gleichzeitig an derselben Stelle passieren, dazu beitragen, optisches Übersprechen zwischen diesen beiden Strahlungen zu vermeiden. Als zueinander "quer" sind dabei zwei Ausrichtungen zu verstehen, die zumindest im Wesentlichen zueinander senkrecht sind, vorzugsweise einen Winkel von zumindest 75°, insbesondere von zumindest 80°, einschließen.

Gemäß einer weiteren vorteilhaften Ausführungsform ist die Prüfvorrichtung dazu ausgebildet, derart mit dem Messsystem gekoppelt zu werden, dass sich bei einer Änderung der Stelle, an der die Messstrahlung die Frontscheibe passiert, insbesondere zwangsläufig, auch die Stelle ändert, an der die Prüfstrahlung die Frontscheibe passiert. Das Verändern der Strahlausrichtung der Messstrahlung führt vorzugsweise automatisch zu einer entsprechenden Änderung in der Prüfvorrichtung, insbesondere zu einem entsprechenden Verstellen des Drehspiegels der Prüfvorrichtung. Durch eine solche Kopplung kann die Messstrahlung einen bestimmten Abtastbereich kontinuierlich durchlaufen und die Prüfstrahlung dabei zugleich ebenso kontinuierlich einen entsprechenden, wenn auch nicht unbedingt denselben, Teil der Frontscheibe durchleuchten. Eine solche Ausführungsform ist insbesondere vorteilhaft, wenn die Überwachung der Frontscheibe auf Verschmutzungen parallel zum laufenden Betrieb des Messsystems erfolgen soll.

In diesem Zusammenhang ist es ferner bevorzugt, wenn die Prüfvorrichtung dazu ausgebildet ist, derart mit dem Messsystem gekoppelt zu werden, dass die Stelle, an der die Messstrahlung die Frontscheibe passiert, und die Stelle, an der die Prüfstrahlung die Frontscheibe passiert, in einem festgelegten räumlichen Verhältnis zueinander stehen. Grundsätzlich können die von der Messstrahlung passierte Stelle und die dabei zugleich von der Prüfstrahlung passierte Stelle der Frontscheibe identisch sein oder überlappen. Zur Vermeidung von optischem Übersprechen sind die Stellen jedoch vorzugsweise verschieden. Ein optisches Übersprechen kann insbesondere dadurch besonders zuverlässig vermieden werden, dass die jeweilige von der Messstrahlung passierte Stelle und die jeweilige von der Prüfstrahlung passierte Stelle der Frontscheibe bezüglich der genannten Drehachse stets diametral zueinander ausgerichtet sind, das heißt, sich bezüglich der Drehachse gegenüberliegen.

Insbesondere um trotz des Verstellens des Drehspiegels um die Drehachse und der daraus resultierenden unterschiedlichen Wege, auf denen die Prüfstrahlung von der Strahlführungsanordnung geführt wird, die Prüfstrahlung in möglichst unkomplizierter Weise jeweils von derselben Strahlungsquelle zu demselben Detektor führen zu können, ist es vorteilhaft, die Strahlungsquelle und den Detektor nahe beieinander anzuordnen, insbesondere in einem Abstand von höchstens 30 mm, vorzugsweise höchstens 10 mm, besonders bevorzugt höchstens 7 mm voneinander. Insbesondere kann die Strahlführungsanordnung die Prüfstrahlung dann jeweils im Wesentlichen auf demselben Weg von einem Umkehrspiegel aus zum Detektor führen, auf dem sie die Prüfstrahlung zuvor von der Strahlungsquelle zu diesem Umkehrspiegel geführt hat.

In diesem Zusammenhang ist es ferner bevorzugt, die Strahlungsquelle und den Detektor an einer Stelle vorzusehen, die in einer Symmetrieebene und/oder auf einer Symmetrieachse des Messsystems, vorzugsweise des Messfensters der Frontscheibe liegt, insbesondere zumindest im Wesentlichen auf der Drehachse liegt. Besonders bevorzugt ist es, wenn die Strahlungsquelle und der Detektor der Prüfvorrichtung an einer gemeinsamen Platine vorgesehen sind, die vorzugsweise dazu ausgebildet ist, an der Drehachse angeordnet zu werden. Beispielsweise kann die Platine so angeordnet werden, dass die Drehachse sie schneidet. Insbesondere trifft die Drehachse dabei senkrecht auf die Platine. Die Strahlungsquelle und der Detektor können bezüglich der Drehachse symmetrisch auf der Platine angeordnet sein. Vorzugsweise beträgt der Abstand der Strahlungsquelle und/oder der Abstand des Detektors von der Platine (jeweils) höchstens 20 mm, besonders bevorzugt höchstens 10 mm, insbesondere höchsten 5 mm.

Das erfindungsgemäße optische Messsystem, bei dem es sich insbesondere um einen Laserscanner handelt, umfasst eine Messstrahlungsquelle, eine Umlenkeinrichtung sowie eine Frontscheibe und ist dazu ausgebildet, eine von der Messstrahlungsquelle erzeugte Messstrahlung mittels der Umlenkeinrichtung mit um eine Drehachse variabler Winkelausrichtung, insbesondere (zumindest mit einer Komponente der Messstrahlung) in zu der Drehachse radialer Richtung, durch die Frontscheibe hindurch auszusenden, wobei die Stelle der Frontscheibe, an der die Messstrahlung die Frontscheibe passiert, von der Winkelausrichtung der Messstrahlung abhängig ist. Ferner umfasst das Messsystem eine erfindungsgemäße Prüfvorrichtung, die insbesondere nach einer der vorstehend beschriebenen Ausführungsformen ausgebildet sein kann. Bei der Drehachse, in Bezug auf welche das Messsystem die Messstrahlung mit variabler Winkelausrichtung aussenden kann, kann es sich insbesondere um die vorstehend genannte Drehachse handeln, um die der Drehspiegel der Prüfvorrichtung verstellbar ist.

Gemäß einer vorteilhaften Ausführungsform des optischen Messsystems umfasst dessen Umlenkeinrichtung eine um die Drehachse drehbare Rotorhalterung, von deren aktueller Drehstellung die Winkelausrichtung der ausgesendeten Messstrahlung abhängig ist und an der ein Drehspiegel zum Umlenken der Messstrahlung in eine von der aktuellen Drehstellung der Rotorhalterung abhängige Winkelausrichtung vorgesehen ist. Der Drehspiegel ist vorzugsweise starr an der Rotorhalterung befestigt. Dadurch kann der Drehspiegel über die Rotorhalterung von einem Motor des Messsystems kontrolliert gedreht werden.

Bei dieser Ausführungsform ist vorteilhafterweise ferner vorgesehen, dass ein Teil der Prüfvorrichtung, insbesondere sowohl die Strahlungsquelle als auch der Detektor, und/oder zumindest ein Teil der Strahlführungsanordnung, insbesondere deren Drehspiegel, an der Rotorhalterung des Messsystems befestigt ist, so dass bei einer Änderung der Winkelausrichtung der ausgesendeten Messstrahlung auch der Weg verändert wird, entlang dessen die Strahlführungsanordnung die Prüfstrahlung von der Strahlungsquelle zu dem Detektor der Prüfvorrichtung führt. Ein Verändern der Strahlausrichtung der Messstrahlung ist auf diese Weise über die Rotorhalterung mit einer entsprechenden Änderung in der Prüfvorrichtung, insbesondere mit einem entsprechenden Verstellen des Drehspiegels der Prüfvorrichtung, gekoppelt, so dass lediglich ein einziger Antrieb für ein koordiniertes Verstellen der Prüfstrahlung gemeinsam mit der Messstrahlung erforderlich ist.

Gemäß einer weiteren vorteilhaften Ausführungsform grenzt die Frontscheibe des Messsystems einen Innenraum des Messsystems nach außen ab, wobei die Strahlungsquelle und der Detektor der Prüfvorrichtung innerhalb des Innenraums angeordnet sind und ein Spiegel, insbesondere ein Umkehrspiegel, der Strahlführungsanordnung der Prüfvorrichtung außerhalb des Innenraums angeordnet ist. Vorzugsweise ist dabei von den optischen Bauteilen der Prüfvorrichtung ausschließlich dieser eine Spiegel außerhalb des Innenraums angeordnet. Insbesondere sind der Drehspiegel und gegebenenfalls der genannte Umlenkspiegel der Strahlführungsanordnung innerhalb des Innenraums angeordnet. Eine solche Ausführungsform hat den Vorteil, dass die meisten Komponenten der Prüfvorrichtung im Innenraum durch die Frontscheibe geschützt sind und lediglich der eine Spiegel, etwa der genannte Umkehrspiegel für das Zurückspiegeln der Prüfstrahlung, außerhalb des Innenraums vorgesehen wird. Dieser Spiegel ist dabei vorzugsweise derart zugänglich angeordnet, dass er sich einfach reinigen lässt, da Verschmutzungen des Spiegels die Prüfstrahlung abschwächen und somit für Verschmutzungen der Frontscheibe gehalten werden könnten.

Die Erfindung wird nachfolgend lediglich beispielhaft unter Bezugnahme auf die Figuren weiter erläutert.
- Fig. 1: zeigt eine Ausführungsform eines erfindungsgemäßen optischen Messsystems mit einer erfindungsgemäßen Prüfvorrichtung in schematischer Querschnittsdarstellung.
- Fig. 2: zeigt einen Ausschnitt einer alternativen Ausführungsform eines erfindungsgemäßen optischen Messsystems mit einer erfindungsgemäßen Prüfvorrichtung in schematischer Querschnittsdarstellung.

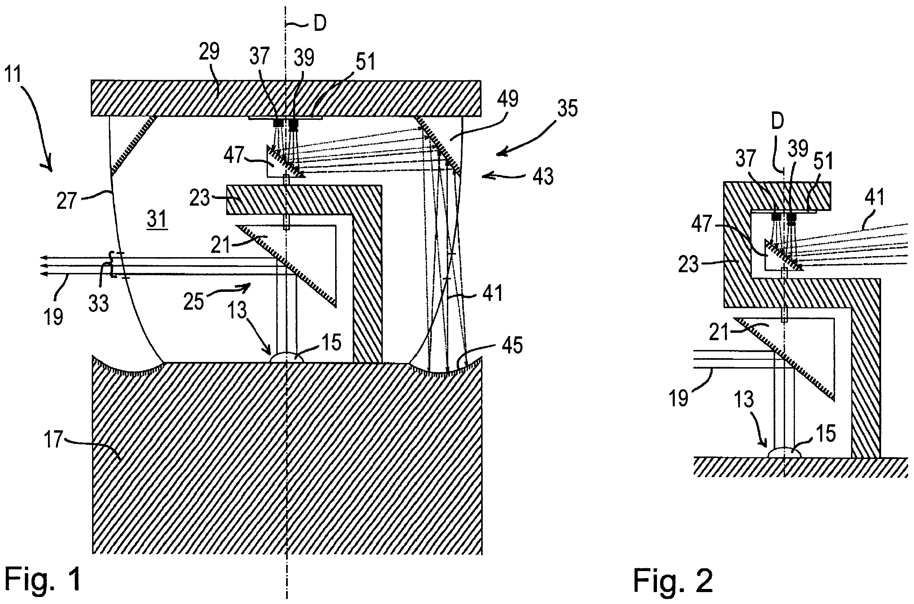

Bei den in den Fig. 1 und 2 dargestellten optischen Messsystemen 11 handelt es sich jeweils um einen Laserscanner, der als Messstrahlungsquelle 13 einen Laser aufweist, wobei von der Messstrahlungsquelle 13 lediglich eine Austrittslinse 15 gezeigt ist. Die übrige Messstrahlungsquelle 13 ist in einen Sockel 17 des Messsystems 11 integriert, dessen Inhalt in den Figuren nicht gezeigt ist. Über die Austrittslinse 15 sendet die Messstrahlungsquelle 13 Messstrahlung 19 aus, die auf einen Drehspiegel 21 trifft. Der Drehspiegel 21 ist an einer Rotorhalterung 23 befestigt, die von einem in den Sockel 17 integrierten, jedoch nicht dargestellten Antrieb motorisch zu einer Drehung um eine Drehachse D antreibbar ist. Bei Drehung der Rotorhalterung 23 wird somit auch der Drehspiegel 21 um die Drehachse D gedreht, wodurch sich die Winkelausrichtung um die Drehachse D der von dem Drehspiegel 21 reflektierten Messstrahlung 19 verändert.

Der Drehspiegel 21 ist dabei derart angeordnet, dass er die zumindest im Wesentlichen entlang der Drehachse D ausgesandte Messstrahlung 19 in zu der Drehachse D zumindest im Wesentlichen radiale Richtung umlenkt. Insofern stellt der Drehspiegel 21 einen Teil einer Umlenkeinrichtung 25 des optischen Messsystems 11 dar. In welche Winkelausrichtung (Azimutwinkel) um die Drehachse D die Messstrahlung 19 umgelenkt wird, hängt von der aktuellen Drehstellung des Drehspiegels 21 bzw. der Rotorhalterung 23 ab, so dass die Winkelausrichtung kontrolliert kontinuierlich veränderbar ist. Die Rotorhalterung 23 kann bei dieser Ausführungsform um volle 360° um die Drehachse D gedreht werden, so dass der Winkelbereich, über den die Strahlausrichtung der Messstrahlung 19 verändert werden kann, ebenfalls volle 360° umfasst. Ein Abtastbereich, den die Messstrahlung 19 bei einer Messung durchlaufen soll, kann somit in Umfangsrichtung um die Drehachse D bis zu 360° umfassen, grundsätzlich aber je nach Anwendung auch auf einen kleineren Winkelbereich beschränkt sein.

Um die Anordnung aus Rotorhalterung 23 und Drehspiegel 21 herum ist eine Frontscheibe 27 angeordnet, die sich rotationssymmetrisch mit konstantem Querschnitt in Umfangsrichtung vollständig um die Drehachse D herum erstreckt. Die Frontscheibe 27 weist im Wesentlichen eine Zylindermantelform mit offenen axialen Stirnseiten auf, wobei aber der Abstand der Frontscheibe 27 von der Drehachse D in Richtung zum Sockel 17 hin mit gebogenem Verlauf abnimmt. Die Frontscheibe 27 sitzt auf dem Sockel 17 auf, wodurch eine der beiden Stirnseiten der Frontscheibe 27 verschlossen wird. Die axial entgegengesetzte Stirnseite der Frontscheibe 27 ist bei dieser Ausführungsform durch einen Deckel 29 verschlossen, der im Wesentlichen die Form einer Kreisscheibe aufweist. Der von der Frontscheibe 27 umschlossene Bereich des Messsystems 11 stellt einen Innenraum 31 des Messsystems 11 dar, der in radialer Richtung durch die Frontscheibe 27 nach außen abgegrenzt und zudem in axialer Richtung einerseits durch den Sockel 17 und andererseits durch den Deckel 29 verschlossen ist. Bei einer nicht gezeigten Ausführungsform umfasst die Frontscheibe eine geschlossene Glaskuppel.

Die von dem Drehspiegel 21 umgelenkte Messstrahlung 19 muss die Frontscheibe 27 passieren, d.h. durch die Frontscheibe 27 hindurchtreten, um nach außen zu gelangen. Die Frontscheibe 27 ist dazu für die Messstrahlung 19 möglichst vollständig transparent, also optisch durchlässig. Die Messstrahlung 19 passiert die Frontscheibe 27 dabei jeweils an einer Stelle, die in einem mittleren Bereich zwischen den beiden bezüglich der Drehachse D axialen Enden der Frontscheibe 27 liegt und zudem von der jeweils aktuellen Winkelausrichtung der Messstrahlung 19 um die Drehachse D abhängt. Da die Messstrahlung 19 einen gewissen Strahlquerschnitt aufweist, ist die von der Messstrahlung 19 passierte Stelle der Frontscheibe nicht punktförmig, sondern entsprechend dem Strahlquerschnitt ausgedehnt. Die Gesamtheit der von der Messstrahlung 19 bei einem Durchlaufen des Abtastbereichs passierten Stellen der Frontscheibe 27 bildet ein Messfenster 33 der Frontscheibe 27, das sich ringförmig um die Drehachse D erstreckt, insbesondere über volle 360°, aber grundsätzlich auch auf einen kleineren Winkelbereich beschränkt sein kann.

Das optische Messsystem 11 weist eine integrierte Prüfvorrichtung 35 auf, die eine Strahlungsquelle 37 in Form einer Infrarot-LED sowie einen Detektor 39 in Form einer Infrarot-Fotodiode aufweist. Die Strahlungsquelle 37 sendet eine Prüfstrahlung 41 aus, die von einer Strahlführungsanordnung 43 der Prüfvorrichtung 35 durch die Frontscheibe 27 hindurch geführt, an einem Umkehrspiegel 45 der Strahlführungsanordnung 43 zurückgespiegelt, erneut durch die Frontscheibe 27 hindurch und zu dem Detektor 39 geführt wird. Die Strahlführungsanordnung 43 der Prüfvorrichtung 35 umfasst zu diesem Zweck neben dem Umkehrspiegel 45 einen Drehspiegel 47 sowie einen Umlenkspiegel 49.

Der Drehspiegel 47 ist wie der Drehspiegel 21 des optischen Messsystems 11 an der Rotorhalterung 23 befestigt, so dass er zusammen mit diesem um die Drehachse D gedreht wird, wenn die Rotorhalterung 23 zu einer Drehung angetrieben wird. Auf diese Weise wird die von der Strahlungsquelle 37 der Prüfvorrichtung 35 ausgesandte Prüfstrahlung 41 von dem Drehspiegel 47 in im Wesentlichen radiale Richtung bezüglich der Drehachse D umgelenkt, wobei die Winkelausrichtung der umgelenkten Prüfstrahlung 41 von der aktuellen Drehstellung des Drehspiegels 47 bzw. der Rotorhalterung 23 abhängt. Der Drehspiegel 21 des Messsystems 11 und der Drehspiegel 47 der Prüfvorrichtung 35 sind dabei starr zueinander derart ausgerichtet, dass die Messstrahlung 19 und die Prüfstrahlung 41 stets in bezüglich der Drehachse D diametral entgegengesetzte Richtungen umgelenkt werden.

Die von dem Drehspiegel 47 umgelenkte Prüfstrahlung 41 trifft auf den stationären Umlenkspiegel 49, der sie in Richtung zum ebenfalls stationären Umkehrspiegel 45 umlenkt. Dieser spiegelt die Prüfstrahlung 41 zum Umlenkspiegel 49 zurück, von dem sie zurück zum Drehspiegel 47 umgelenkt wird, der sie zum nahe der Strahlungsquelle 37 angeordneten Detektor 39 reflektiert. Die Prüfstrahlung 41 wird somit im Wesentlichen auf demselben Pfad zurückgeführt, auf dem sie von der Strahlungsquelle 37 zum Umkehrspiegel 45 gelangt ist.

Damit die Prüfstrahlung 41 unabhängig von der aktuellen Drehstellung des Drehspiegels 47 auf den Umlenkspiegel 49 und den Umkehrspiegel 45 treffen kann, ohne dass sich der Umlenkspiegel 49 und der Umkehrspiegel 45 mitdrehen müssen, erstrecken sich der Umlenkspiegel 49 und der Umkehrspiegel 45 jeweils mit konstantem Querschnitt ringförmig um die Drehachse D. Wie in Fig. 1 ersichtlich, ist der Querschnitt der Spiegelfläche des Umlenkspiegels 49 dabei im Wesentlichen eine gerade Linie, wohingegen der Querschnitt der Spiegelfläche des Umkehrspiegels 45 derart geschwungen ist, dass die Spiegelfläche des Umkehrspiegels 45 eine Freiformfläche bildet. Die Freiformfläche ist dabei derart gewählt, dass die Prüfstrahlung 41, die auf dem Weg von der Strahlungsquelle 37 zum Umkehrspiegel 45 hinsichtlich ihres Strahlquerschnitts auseinandergelaufen ist, wieder gebündelt wird, so dass möglichst die gesamte Prüfstrahlung 41, sofern sie nicht von Verschmutzungen der Frontscheibe 27 absorbiert und/oder gestreut wird, auf den Detektor 39 trifft.

Auf dem Weg vom Umlenkspiegel 49 zum Umkehrspiegel 45 und zurück passiert die Prüfstrahlung 41 zweimal die Frontscheibe 27. Die Strahlführungsanordnung 43 der Prüfvorrichtung 35 ist derart ausgebildet, dass dabei jeweils zumindest ein Teil des Messfensters 33 passiert wird. Durch Drehen des Drehspiegels 47 mittels der Rotorhalterung 23 kann die Prüfstrahlung 41 insgesamt durch das gesamte Messfenster 33 hindurch geführt werden. Befinden sich Verschmutzungen auf der Frontscheibe 27, insbesondere im Bereich des Messfensters 33, wird die Prüfstrahlung 41 beim Passieren der Frontscheibe 27 zumindest teilweise abgeschwächt, insbesondere aufgrund von Absorption und/oder Streuung. Infolge des zweifachen Passierens der Frontscheibe wird dieser Effekt noch verstärkt. Die Abschwächung der Prüfstrahlung 41 kann über den Detektor 39 erfasst werden, so dass anhand der erfassten Abschwächung auf den Verschmutzungsgrad der Frontscheibe 27, insbesondere des Messfensters 33, geschlossen werden kann. Das ermöglicht festzustellen, ob der Verschmutzungsgrad eine gewisse Schwelle überschritten hat, ab der die Beeinträchtigung der Messstrahlung 19 durch die Verschmutzung nicht vernachlässigt werden kann, und gegebenenfalls in geeigneter Weise darauf zu reagieren.

Bei der in Fig. 1 gezeigten Ausführungsform sind die Strahlungsquelle 37 und der Detektor 39 der Prüfvorrichtung 35 an einer gemeinsamen Platine 51 angeordnet, die symmetrisch, insbesondere koaxial, zur Drehachse D angeordnet ist, welche senkrecht zu der Platine 51 ausgerichtet ist. Die Platine 51 ist dabei stationär an dem Deckel 29 des Messsystems 11 befestigt. Eine dazu alternative Anordnung, bei der die Platine 51 zwar nicht stationär ist, aber gleichwohl senkrecht und symmetrisch, insbesondere koaxial, zur Drehachse D angeordnet ist, ist in Fig. 2 gezeigt.

Bei dieser in Fig. 2 dargestellten Ausführungsform ist die Platine 51 mit der Strahlungsquelle 37 und dem Detektor 39 in fester räumlicher Anordnung relativ zu dem Drehspiegel 47 wie dieser an der Rotorhalterung 23 befestigt, die dafür eine gegenüber der in Fig. 1 gezeigten Ausführungsform modifizierte Form aufweist. Durch die Anordnung der Platine 51 an der Rotorhalterung 23 kann die Kontaktierung der Platine 51, insbesondere zur Energieversorgung der Strahlungsquelle 37 und des Detektors 39 sowie zur Datenübertragung, über die Rotorhalterung 23 erfolgen, was unter Umständen einfacher ist, als wenn die Kontaktierung über den durch die Frontscheibe 27 mit dem Sockel 17 verbundenen Deckel 29 erfolgen müsste.

Bei der alternativen Ausführungsform nach Fig. 2 sind der Umlenkspiegel 49 und der Umkehrspiegel 45 ebenso stationär wie bei der in Fig. 1 gezeigten Ausführungsform. Grundsätzlich könnten aber alternativ oder zusätzlich zu der Strahlungsquelle 37 und dem Detektor 39 auch sonstige Elemente der Prüfvorrichtung 35, etwa der Umlenkspiegel 49, zu gemeinsamer Drehung mit dem Drehspiegel 45 gekoppelt und zu diesem Zweck insbesondere ebenfalls an der Rotorhalterung 23 befestigt sein. In einem solchen Fall bräuchte der Umlenkspiegel 49 dann keine Ringform aufzuweisen.

Bei den Figuren 1 und 2 handelt es sich um lediglich schematische Darstellungen, die nicht längen-, winkel- oder formgetreu sein müssen.

### Bezugszeichen

- 11: Optisches Messsystem
- 13: Messstrahlungsquelle
- 15: Austrittslinse
- 17: Sockel
- 19: Messstrahlung
- 21: Drehspiegel
- 23: Rotorhalterung
- 25: Umlenkeinrichtung
- 27: Frontscheibe
- 29: Deckel
- 31: Innenraum
- 33: Messfenster
- 35: Prüfvorrichtung
- 37: Strahlungsquelle
- 39: Detektor
- 41: Prüfstrahlung
- 43: Strahlführungsanordnung
- 45: Umkehrspiegel
- 47: Drehspiegel
- 49: Umlenkspiegel
- 51: Platine
- D: Drehachse

## Patentansprüche

1. Prüfvorrichtung (35) zum Erfassen von Verschmutzungen einer Frontscheibe (27) eines optischen Messsystems (11), insbesondere eines Laserscanners, welches dazu ausgebildet ist, Messstrahlung (19) mit um eine Drehachse (D) variabler Winkelausrichtung durch die Frontscheibe (27) hindurch auszusenden, wobei die Stelle der Frontscheibe (27), an der die Messstrahlung (19) die Frontscheibe (27) passiert, von der Winkelausrichtung der Messstrahlung (19) abhängig ist,
wobei die Prüfvorrichtung (35) eine Strahlungsquelle (37) zum Erzeugen einer Prüfstrahlung (41), einen Detektor (39) zum Erfassen der Prüfstrahlung (41) sowie eine Strahlführungsanordnung (43) umfasst, die dazu ausgebildet ist, die Prüfstrahlung (41) von der Strahlungsquelle (37) durch die Frontscheibe (27) hindurch zu dem Detektor (29) zu führen, wobei die Strahlführungsanordnung (43) einen um die Drehachse (D) verstellbaren Drehspiegel (47) umfasst und dazu ausgebildet ist, die Prüfstrahlung (41) unabhängig von der aktuellen Stellung des Drehspiegels (47) von der Strahlungsquelle (37) zu dem Detektor (39) zu führen und die Prüfstrahlung (41) auf dem Weg von der Strahlungsquelle (37) zu dem Detektor (39) an einer Stelle durch die Frontscheibe (27) hindurch zu führen, die von der aktuellen Stellung des Drehspiegels (47) abhängig ist.

2. Prüfvorrichtung nach Anspruch 1,
wobei die Strahlführungsanordnung zumindest einen Spiegel (45, 49) umfasst, der sich zumindest teilweise ringförmig um die Drehachse (D) erstreckt.

3. Prüfvorrichtung nach Anspruch 2,
wobei die Strahlführungsanordnung zumindest zwei Spiegel (45, 49) umfasst, die sich zumindest teilweise ringförmig um die Drehachse (D) erstrecken, und dazu ausgebildet ist, die Prüfstrahlung (41) auf dem Weg von der Strahlungsquelle (37) zu dem Detektor (39) jeweils von dem einen der zwei Spiegel (45, 49) durch die Frontscheibe (27) hindurch zu dem anderen der zwei Spiegel (45, 49) zu führen.

4. Prüfvorrichtung nach zumindest einem der vorstehenden Ansprüche,
wobei die Strahlführungsanordnung (43) dazu ausgebildet ist, die Prüfstrahlung (41) auf dem Weg von der Strahlungsquelle (37) zu dem Detektor (39) jeweils zweimal, vorzugsweise an zumindest im Wesentlichen derselben Stelle, durch die Frontscheibe (27) hindurch zu führen.

5. Prüfvorrichtung nach Anspruch 4,
wobei die Strahlführungsanordnung (43) einen Umkehrspiegel (45) umfasst und dazu ausgebildet ist, die Prüfstrahlung (41) auf dem Weg von der Strahlungsquelle (37) zu dem Detektor (39) jeweils von der Strahlungsquelle (37) durch die Frontscheibe (27) hindurch zu dem Umkehrspiegel (45) zu führen, an dem Umkehrspiegel (45) zurückzuspiegeln und von dem Umkehrspiegel (45), vorzugsweise an zumindest im Wesentlichen derselben Stelle wie zuvor, durch die Frontscheibe (27) hindurch zu dem Detektor (39) zu führen.

6. Prüfvorrichtung nach Anspruch 5,
wobei die Strahlführungsanordnung (43) einen Umlenkspiegel (49) umfasst und dazu ausgebildet ist, die Prüfstrahlung (41) auf dem Weg von der Strahlungsquelle (37) zu dem Detektor (39) jeweils von der Strahlungsquelle (37) über den Umlenkspiegel (49) durch die Frontscheibe (27) hindurch zu dem Umkehrspiegel (45) zu führen und/oder von dem Umkehrspiegel (45) durch die Frontscheibe (27) hindurch über den Umlenkspiegel (49) zu dem Detektor zu führen.

7. Prüfvorrichtung nach zumindest einem der vorstehenden Ansprüche,
wobei die Strahlführungsanordnung (43) dazu ausgebildet ist, die Prüfstrahlung (41) auf dem Weg von der Strahlungsquelle (37) zu dem Detektor (39) jeweils in einer Strahlausrichtung durch die Frontscheibe (27) hindurch zu führen, die zumindest im Wesentlichen parallel zu der Drehachse (D) ist.

8. Prüfvorrichtung nach zumindest einem der vorstehenden Ansprüche,
wobei die Prüfvorrichtung (35) dazu ausgebildet ist, derart mit dem Messsystem (11) gekoppelt zu werden, dass sich bei einer Änderung der Stelle, an der die Messstrahlung (19) die Frontscheibe (27) passiert, auch die Stelle ändert, an der die Prüfstrahlung die Frontscheibe (27) passiert.

9. Prüfvorrichtung nach Anspruch 8,
wobei die Prüfvorrichtung (35) dazu ausgebildet ist, derart mit dem Messsystem (11) gekoppelt zu werden, dass die Stelle, an der die Messstrahlung (10) die Frontscheibe (27) passiert, und die Stelle, an der die Prüfstrahlung (41) die Frontscheibe (27) passiert, in einem festgelegten räumlichen Verhältnis zueinander stehen, vorzugsweise bezüglich der Drehachse (D) diametral zueinander ausgerichtet sind.

10. Prüfvorrichtung nach zumindest einem der vorstehenden Ansprüche,
wobei die eine Strahlungsquelle (37) und der eine Detektor (39) der Prüfvorrichtung (35) an einer gemeinsamen Platine (51) angeordnet sind, die dazu ausgebildet ist, an der Drehachse (D) angeordnet zu werden.

11. Optisches Messsystem (11), insbesondere Laserscanner, mit einer Messstrahlungsquelle (13), einer Umlenkreinrichtung (25) sowie mit einer Frontscheibe (27), wobei das Messsystem (11) dazu ausgebildet ist, eine von der Messstrahlungsquelle (13) erzeugte Messstrahlung (19) mittels der Umlenkeinrichtung (25) mit um eine Drehachse (D) variabler Winkelausrichtung durch die Frontscheibe (27) hindurch auszusenden, wobei die Stelle der Frontscheibe (27), an der die Messstrahlung (19) die Frontscheibe (27) passiert, von der Winkelausrichtung der Messstrahlung (19) abhängig ist, und wobei das Messsystem (11) ferner eine Prüfvorrichtung (35) nach zumindest einem der vorstehenden Ansprüche umfasst.

12. Optisches Messsystem nach Anspruch 11,
wobei die Umlenkeinrichtung (25) eine um die Drehachse (D) drehbare Rotorhalterung (23) umfasst, von deren aktueller Drehstellung die Winkelausrichtung der ausgesendeten Messstrahlung (19) abhängig ist und an der ein Drehspiegel (21) zum Umlenken der Messstrahlung (19) in eine von der aktuellen Drehstellung der Rotorhalterung (23) abhängige Winkelausrichtung vorgesehen ist, und
wobei ein Teil der Prüfvorrichtung (35), insbesondere sowohl die Strahlungsquelle (37) als auch der Detektor (39) und/oder zumindest ein Teil der Strahlführungsanordnung (43), an der Rotorhalterung (23) des Messsystems (11) befestigt ist, so dass bei einer Änderung der Winkelausrichtung der ausgesendeten Messstrahlung (19) auch der Weg verändert wird, entlang dessen die Prüfstrahlung (41) von der Strahlungsquelle (37) zu dem Detektor (29) der Prüfvorrichtung (35) geführt wird.

13. Optisches Messsystem nach Anspruch 11 oder 12,
wobei die Frontscheibe (27) des Messsystems (11) einen Innenraum (31) des Messsystems (11) nach außen abgrenzt und die Strahlungsquelle (37) und der Detektor (39) der Prüfvorrichtung (35) innerhalb des Innenraums (31) angeordnet sind, wobei ein Spiegel (45) der Strahlführungsanordnung (43) der Prüfvorrichtung (35) außerhalb des Innenraums (31) angeordnet ist.
